# EUROPEAN PATENT SPECIFICATION

(11) **EP 1 273 432 B1**
(45) Date of publication and mention of the grant of the patent: **19.01.2005**
(21) Application number: 02014783.1
(22) Date of filing: 04.07.2002
(51) Int. Cl.: B32B 3/12, E04C 2/34, A47B 96/20

(54) **A composite panel with surfaces of stony, ceramics or the like materials for making furniture pieces, walls and doors**
Verbundplatte mit Oberflächen aus Stein, Keramik oder ähnlichen Materialien zum Anfertigen von Möbelstücken, Wänden oder Türen
Panneau composite avec des surfaces de pierre, céramiques ou matériaux similaires pour la réalisation d'éléments de mobilier, de portes et de parois

(30) Priority: 04.07.2001 IT MI20011419
(43) Date of publication of application: 08.01.2003
(73) Proprietor: Donati, Francesco, 24060 Cenate Sopra (Bergamo) (IT); Donati, Giuseppe, 24060 Cenate Sopra (Bergamo) (IT)
(72) Inventor: Donati, Francesco, 24060 Cenate Sopra (Bergamo) (IT); Donati, Giuseppe, 24060 Cenate Sopra (Bergamo) (IT); Oberti, Pierrosario, 24069 Cenate Sotto (Bergamo) (IT)
(74) Representative: Cicogna, Franco

(56) References cited:
- WO-A-01/09455
- GB-A- 422 920
- GB-A- 2 245 523
- US-A- 3 723 233
- DATABASE WPI Week 9313 Derwent Publications Ltd., London, GB; AN 1993-104397 XP002217080 & JP 05 043727 A (UNITIKA LTD), 23 February 1993 (1993-02-23)

## Description

### BACKGROUND OF THE INVENTION

The present invention relates to a composite panel, having a surface made of a stony, ceramics or the like material, specifically designed for making furniture pieces, walls or doors.

As is known, the panels used for making furniture pieces, and constructional elements such as wings, bottoms, tables and the like, must have very good mechanical strength characteristics and a satisfactory aesthetic aspect.

For making the above mentioned panels, there are conventionally used synthetic materials such as stone or marble.

However, as the panel has a comparatively large size, the weight of these prior materials is excessive and, anyhow, it is not possible to exceed a given size, since the mentioned prior materials do not provide the required mechanical strength.

### SUMMARY OF THE INVENTION

Accordingly, the aim of the present invention is to provide such a composite panel, specifically designed for furniture pieces, walls or doors, provided with at least a surface of a stony, ceramics or the like materials, and very good mechanical strength characteristics.

Within the scope of the above mentioned aim, a main object of the present invention is to provide such a panel having a very small weight, while providing very good mechanical characteristics.

Another object of the present invention is to provide such a panel having very good aesthetic characteristics.

Yet another object of the present invention is to provide such a panel which can be processed and machined to a finished condition by substantially using machining and processing methods like those for machining prior panels made of the same materials, and by using the same machining apparatus.

According to one aspect of the present invention, the above mentioned aim and objects, as well as yet other objects, which will become more apparent hereinafter, are achieved by a composite panel, with at least a surface of a stony, ceramics or the like material, specifically designed for making furniture pieces, characterized in that said panel comprises a first plate element and a second plate element being parallel coupled to one another through an interposition of a corrugated coupling element made of a metal material, at least the first plate element being made of ceramics, stone or marble materials and in that further comprises a perimetrical frame as defined in claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

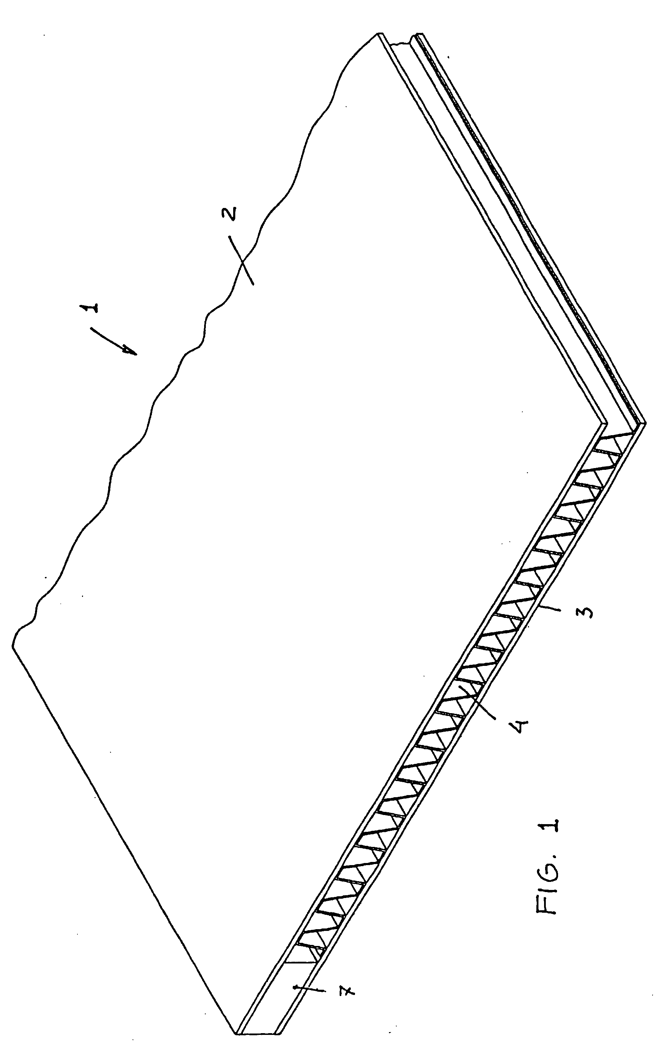

Figure 1 is a broken away perspective view of the panel according to the present invention;

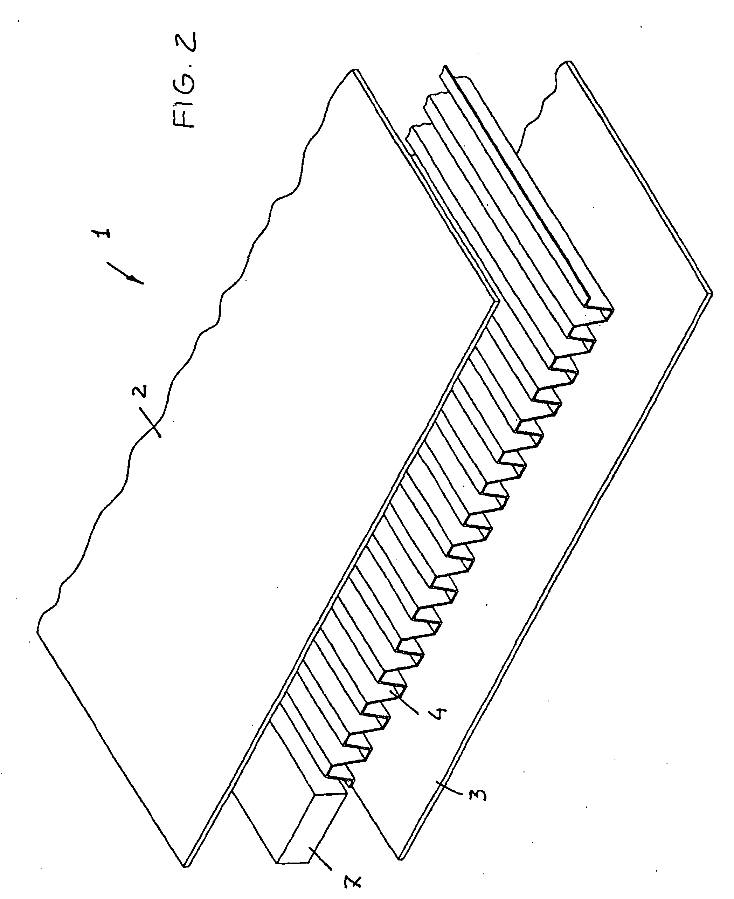

Figure 2 is a further exploded perspective view of the panel according to the invention;
Figure 3 is a cross-sectional view of the panel according to the invention; and
Figure 4 is a further cross-sectional view of the panel according to a further aspect of the invention.

### DESCRIPTION OF THE PREFERRED EMBODIMENTS

With reference to the number references of the above mentioned figures, the composite panel according to the invention, which has been generally indicated by the reference number 1, comprises a first plate element 2 and a second plate element 3, coupled to one another in a substantially parallel relationship, through an interposition of a corrugated coupling element comprising, in this embodiment, a fretted element 4, made of a metal material, such as aluminium, AISI steel, galvanized sheet metal, titanium and alloys thereof.

The fretted element 4 advantageously comprises a profile including a plurality of horizontal portions 5, corresponding to peaks and valleys of the contour or profile, joined by a plurality of angled portions 6, so as to provide a series of following trapezium patterns.

The fretted element 4 is applied with its horizontal surfaces 5 to contact the plate-like elements 2 and 3 to connect said plate-like elements to one another for example by glueing.

This embodiment provides the advantage of providing a broad contact surface between the fretted element 4 and inner surfaces of the plate-like elements 2 and 3, thereby providing a particularly strong glued connection.

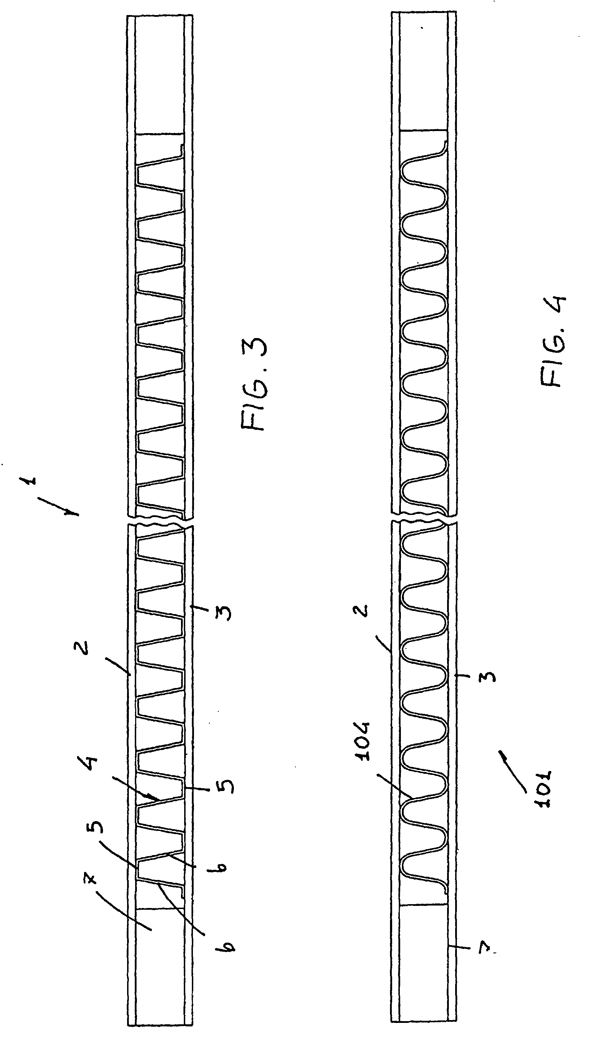

The fretted element, for coupling the plate-like elements 2 and 3, can also be made as an ondulated or waved sheet metal 104, to provide a panel 101, as shown in figure 4.

The panel 1, 101 comprises a perimetrical frame 7, included between the plate-like elements 2 and 3, which is made of the same material as that of at least one of the plate-like elements 2 or 3, to allow the panel to be machined by the same machining apparatus as those used for machining the plate-like elements.

According to the present invention, the plate-like elements 2 and 3 can be made of ceramics, natural stone or marble materials or they can comprise mirrors.

The composite panel provided of the perimetrical frame 7, can be accordingly machined by conventional tool machines, as those used for machining elements made of the above mentioned synthetic materials, and it can be processed to provide a book supporting panel, a cabinet wing, a kitchen furniture wing, and so on.

The comparatively high mechanical strength of the composite panel according to the present invention, also allows said panel to be usefully used for making furniture constructional elements or pieces, such as bottoms, holding panels, supporting panels, and also for making tables.

The composite panel according to the invention can also be made as a plate-like element made of a material different from the above mentioned materials.

For example, the second plate-like element 3 can be made of a less value material, or a stronger material, or a material having different characteristics, depending on the panel application.

The second plate-like element 3 can be made, for example, of a wood material in the form of plywood, Faesite™, MDF, hardboard or natural wood, and optional it can be coated by a veneer material and the like.

According to another embodiment of the invention, the second plate-like element 3 can be made of a synthetic laminated material, a glass-resin material, a glass-fabric material, a glass material, a plexiglas material and different plastics or synthetic resin materials.

Both said elements can also comprise mirrors.

Thus, the panel is much more lighter and stronger than a conventional prior panel having mirrors applied on both surfaces thereof.

The second plate-like element can also comprise a metal material plate.

It has been found that the invention fully achieves the intended aim and objects.

In fact, the invention provides a composite panel having high mechanical and aesthetic characteristics.

In practicing the invention, the used materials, and the contingent size and shapes, can be any, depending on the requirements.

## Claims

1. A composite panel (1) for making furniture pieces, comprising a first plate element (2) and a second plate element (3), said first (2) and second (3) plate elements being parallel and coupled to one another by a corrugated coupling spacer element (4) made of a metal material, **characterized in that** at least said first plate element (2) is made of ceramics, stone or marble materials, and that said panel further comprises a perimetrical frame (7), included between said plate elements (2, 3) and made of the same material as at least one of said plate elements.

2. A panel, according to Claim 1, **characterized in that** also said second plate element (3) is made of ceramics, stone or marble materials.

3. A panel, according to Claim 1 or 2, **characterized in that** said corrugated coupling element (4) comprises a fretted element made of a metal material such as aluminium, AISI steel, galvanized sheet metal, titanium and other metal alloys.

4. A panel, according to one or more of the preceding claims, **characterized in that** said fretted element (4) comprises a profile including a plurality of horizontal portions, corresponding to peaks and valleys of said profile, joined by a plurality of angled portions, so as to form a series of following trapezium patterns, said fretted element (4) being applied with the horizontal surfaces thereof in contact with said plate elements (2, 3), to connect said plate elements by glueing.

5. A panel, according to one or more of the preceding claims, **characterized in that** said corrugated element (4) is an ondulated or waved sheet metal element.

6. A panel, according to one or more of the preceding claims, **characterized in that** said second plate element (3) is made of a material different from that of the first plate element.

7. A panel, according to one or more of then preceding claims, **characterized in that** said second plate element (3) is made of wood materials such as plywood, MDF, hardboard, or natural wood.

8. A panel, according to one or more of the preceding claims, **characterized in that** said second plate element (3) is made of materials such as a synthetic laminated material, a glass-resin material, a glass fabric material, a glass material, a plexiglas material and different plastics or synthetic resin materials.

9. A panel, according to one or more of the preceding claims, **characterized in that** said second plate element (3) comprises a mirror.

## Patentansprüche

1. Verbundplatte (1) zum Herstellen von Möbelstücken, umfassend ein erstes Plattenelement (2) und ein zweites Plattenelement (3), wobei das erste Plattenelement (2) und das zweite Plattenelement (3) parallel zueinander sind und durch ein welliges Kupplungs-Abstandhalter-Element (4), das aus einem Metallmaterial hergestellt ist, aneinandergekoppelt sind, **dadurch gekennzeichnet, dass** mindestens das erste Plattenelement (2) aus Keramik-, Stein- oder Marmormaterial hergestellt ist und dass die Platte weiterhin einen Umfangsrahmen (7) umfasst, der zwischen den Plattenelementen (2, 3) eingeschlossen und aus demselben Material wie mindestens eines der Plattenelemente hergestellt ist.

2. Platte nach Anspruch 1, **dadurch gekennzeichnet, dass** auch das zweite Plattenelement (3) aus Keramik-, Stein- oder Marmormaterial hergestellt ist.

3. Platte nach Anspruch 1 oder 2, **dadurch gekennzeichnet, dass** das wellige Kupplungselement (4) ein reiboxidiertes Element umfasst, das aus einem Metallmaterial, beispielsweise aus Aluminium, AISI-Stahl, galvanisiertem Blech, Titan oder anderen Metalllegierungen, hergestellt ist.

4. Platte nach einem oder mehreren der vorangehenden Ansprüche, **dadurch gekennzeichnet, dass** das reiboxidierte Element (4) ein Profil umfasst, das eine Mehrzahl horizontaler Abschnitte umfasst, welche Spitzen und Tälern des Profils entsprechen, verbunden durch eine Mehrzahl winkeliger Abschnitte, um eine Serie aufeinanderfolgender Trapezmuster zu bilden, wobei das reiboxidierte Element (4) mit seinen horizontalen Oberflächen mit den Plattenelementen (2, 3) in Kontakt stehend angeordnet wird, um die Plattenelemente durch Kleben zu verbinden.

5. Platte nach einem oder mehreren der vorangehenden Ansprüche, **dadurch gekennzeichnet, dass** das wellige Element (4) ein gewelltes oder wellenförmiges Blechelement ist.

6. Platte nach einem oder mehreren der vorangehenden Ansprüche, **dadurch gekennzeichnet, dass** das zweite Plattenelement (3) aus einem Material hergestellt ist, welches von jenem des ersten Plattenelements verschieden ist.

7. Platte nach einem oder mehreren der vorangehenden Ansprüche, **dadurch gekennzeichnet, dass** das zweite Plattenelement (3) aus Holzmaterialien, beispielsweise aus Sperrholz, MDF, Hartfaserplatte oder Naturholz, hergestellt ist.

8. Platte nach einem oder mehreren der vorangehenden Ansprüche, **dadurch gekennzeichnet, dass** das zweite Plattenelement (3) aus Materialien wie beispielsweise einem synthetischen laminierten Material, einem Glas-Harz-Material, einem Glas-Textilstoff-Material, einem Glasmaterial, einem Plexiglasmaterial und verschiedenen Kunststoffen oder Kunstharzmaterialien hergestellt ist.

9. Platte nach einem oder mehreren der vorangehenden Ansprüche, **dadurch gekennzeichnet, dass** das zweite Plattenelement (3) einen Spiegel umfasst.

## Revendications

1. Un panneau composite (1) pour la réalisation d'éléments de mobilier, comprenant un premier élément formant plaque (2) et un second élément formant plaque (3), lesdits premier (2) et second (3) éléments formant plaque étant parallèles et raccordés l'un à l'autre au moyen d'un élément d'espacement et de raccord ondulé (4) fait d'un matériau métallique, **caractérisé en ce qu'**au moins ledit premier élément formant plaque (2) est fait d'un matériau en céramique, pierre ou marbre, et **en ce que** ledit panneau comprend en outre un cadre périmétrique (7), inclus entre lesdits éléments formant plaque (2, 3) et fait du même matériau qu'au moins l'un desdits éléments formant plaque.

2. Un panneau selon la revendication 1, **caractérisé en ce que** ledit second élément formant plaque (3) est également fait d'un matériau en céramique, pierre ou marbre.

3. Un panneau selon la revendication 1 ou 2, **caractérisé en ce que** ledit élément de raccord ondulé (4) comprend un élément onduleux fait d'un matériau métallique tel que l'aluminium, l'acier AISI, un métal en feuille galvanisé, le titane et d'autres alliages métalliques.

4. Un panneau selon une ou plusieurs des revendications précédentes, **caractérisé en ce que** ledit élément onduleux (4) comprend un profil incluant une pluralité de parties horizontales, correspondant à des pics et à des creux dudit profil, reliés par une pluralité de parties angulaires, de façon à former une série de motifs trapézoïdaux successifs, ledit élément onduleux (4) étant appliqué avec ses surfaces horizontales en contact avec lesdits éléments formant plaque (2, 3), pour relier lesdits éléments formant plaque par collage.

5. Un panneau selon une ou plusieurs des revendications précédentes, **caractérisé en ce que** ledit élément ondulé (4) est un élément en feuille métallique ondulée ou à ondulations.

6. Un panneau selon une ou plusieurs des revendications précédentes, **caractérisé en ce que** ledit second élément formant plaque (3) est fait d'un matériau différent de celui du premier élément formant plaque.

7. Un panneau selon une ou plusieurs des revendications précédentes, **caractérisé en ce que** ledit second élément formant plaque (3) est fait de matériaux à base de bois, tels que le contreplaqué, le médium, les panneaux durs ou le bois naturel.

8. Un panneau selon une ou plusieurs des revendications précédentes, **caractérisé en ce que** ledit second élément formant plaque (3) est fait de matériaux tels qu'un matériau stratifié synthétique, un matériau en verre résine, un matériau en tissu de verre, un matériau en verre, un matériau en plexiglas et différentes matières plastiques ou matériaux en résine synthétique.

9. Un panneau selon une ou plusieurs des revendications précédentes, **caractérisé en ce que** ledit élément formant plaque (3) comprend un miroir.
